# EUROPÄISCHE PATENTSCHRIFT

(11) **EP 0 700 841 B1**
(45) Veröffentlichungstag und Bekanntmachung des Hinweises auf die Patenterteilung: **21.04.1999**
(21) Anmeldenummer: 95110695.4
(22) Anmeldetag: 08.07.1995
(51) Int. Cl.: B65G 1/00, B65G 1/137, G05D 1/02

(54) **Verfahren zur Verwaltung eines Lagersystems und mobile Einheit**
Method for managing a storage system and mobile unit
Procédé de gestion d'un système de stockage et unité mobile

(30) Priorität: 09.09.1994 DE 4432064
(43) Veröffentlichungstag der Anmeldung: 13.03.1996
(73) Patentinhaber: DATA LOGIC OPTIK ELEKTRONIK GmbH, 73268 Erkenbrechtsweiler (DE)
(72) Erfinder: Lenk, Bernhard, D-73230 Kirchheim/Teck (DE)
(74) Vertreter: Liesegang, Roland, Dr.-Ing.

(56) Entgegenhaltungen:
- EP-A- 0 169 156
- EP-A- 0 179 308
- WO-A-91/09375
- DE-A- 3 434 572
- PATENT ABSTRACTS OF JAPAN vol. 17 no. 692 (P-1663) ,17.Dezember 1993 & JP-A-05 233653 (TOKICO) 10.September 1993,
- TECHNISCHE RUNDSCHAU, Bd. 81, Nr. 1, 6.Januar 1989 BERN CH, Seiten 34-39, XP 000118635 HARTMUT JORICHS 'Neue Systeme zur Steuerung von Flurförderzeugen'
- FORDERN UND HEBEN, Bd. 40, Nr. 3, März 1990 MAINZ DE, Seiten 171-172, XP 000103288 ECKEHARD WEBER 'Infrarot-Datenübertragung optimiert den Einsatz von Flurförderzeugen'

## Beschreibung

Die Erfindung betrifft ein Verfahren zur Verwaltung eines Lagersystems gemäß dem Oberbegriff des Anspruchs 1 und eine dafür geeignete mobile Einheit.

Es ist bekannt (TECHNISCHE RUNDSCHAU, Bd. 81, Nr. 1, 6.Januar 1989 BERN CH, Seiten 34-39, XP 000118635 HARTMUT JORICHS 'Neue Systeme zur Steuerung von Flurförderzeugen'), in der Lagerlogistik zum Beispiel Stapler, Flurfahrzeuge und/oder Mitarbeiter mit mobilen Datenerfassungseinheiten auszurüsten, um alle Logistikbelange vor Ort abwickeln zu können. Mit den Datenerfassungseinheiten, insbesondere Strichcode-Scannern, werden Veränderungen im Lagerbestand registriert und diese dann über eine Kommunikationsverbindung, insbesondere über Datenfunk oder eine Infrarot-Verbindung einer Leitzentrale mitgeteilt. Die Leitzentrale vergibt Aufträge für durchzuführende Arbeiten, wobei die Auftragsübermittlung ebenfalls über die erwähnte Kommunikationsverbindung erfolgt. Das bekannte Verfahren läßt eine optimale Verwaltung des Lagers nicht zu. Es ist lediglich möglich, bestimmte Vorgänge zu koordinieren, jedoch nicht die Komponenten des Gesamtsystems aufeinander abzustimmen.

Der Erfindung liegt daher die Aufgabe zugrunde, ein Verfahren zur Verwaltung eines Lagersystems anzugeben, das es gestattet, auch in ihrer Gesamtheit optimierte Abläufe durchzuführen.

Diese Aufgabe wird durch die Merkmale der Ansprüche 1 bzw. 4 gelöst. Damit ist erfindungsgemäß eine Möglichkeit geschaffen, das Gesamtsystem zu optimieren. Da der Leitzentral-Rechner alle Aktivitäten kennt, die im Lager durchzuführen sind und ferner durch das Satelliten-Navigations-System stets den jeweiligen Standort einer mobilen Einheit/eines mobilen Terminals kennt, ist es möglich, die Lagerverwaltung nach weg-/zeit-/und/oder prozeßabhängigen Parametern optimiert durchzuführen. Der Datenfunk/die IR-Verbindung dient somit dazu, die erwähnten optimierten Abläufe abzuwickeln, wobei über das Satelliten-Navigations-System die Standortbestimmung erfolgt. Der Datenfunk/die Infrarot-Verbindung bewirkt somit lediglich die Kommunikation.

Nach einer Weiterbildung der Erfindung ist vorgesehen, daß die von den mobilen Einheiten ermittelten Standortdaten über die Kommunikationsverbindung dem Leitzentral-Rechner zugeführt werden. Die mobilen Einheiten weisen somit Einrichtungen auf, die mit den Satelliten des Satelliten-Navigations-Systems zusammenwirken und aufgrund entsprechender, von den Satelliten stammender Signale eine Standortbestimmung zulassen. Die entsprechenden Standortdaten, die an den mobilen Einheiten zur Verfügung stehen, müssen zum Leitzentral-Rechner übermittelt werden, was über die erwähnte Kommunikationsverbindung erfolgt. Die Kommunikationsverbindung dient ferner dazu, die von den Datenerfassungseinheiten, insbesondere Strichcode-Scannern, erfaßten Daten an den Rechner zu übermitteln und werden überdies dazu verwendet, Aufträge vom Leitzentral-Rechner zu empfangen.

Die Erfindung wird anhand eines einfachen Beispiels näher erläutert. Sollen beispielsweise aus einem Hochregal drei näher konkretisierte Wareneinheiten entnommen werden, so ist dieser Auftrag dem Leitzentral-Rechner bekannt. Der Rechner hat die Aufgabe, über die Kommunikationsverbindung einem der mobilen Einheiten diesen Auftrag zu übermitteln. Er wird -unter Berücksichtigung der Standorte der jeweiligen mobilen Einheiten- die Einheit auswählen, die unter Berücksichtigung eines weg-/zeit- optimierten Ablaufs diesen Auftrag ausführen kann. Dabei ist ferner zu berücksichtigen, welche weiteren Aufträge gerade abgewickelt werden beziehungsweise noch abzuwickeln sind. Unter Berücksichtigung aller Parameter wählt nun der Leitzentral-Rechner diejenige der beiden mobilen Einheiten aus, die die Arbeiten optimiert durchführen kann. Diese Einheit bewegt sich jetzt an die entsprechende Stelle des Hochregals und es werden die Wareneinheiten entnommen, wobei die Entnahme mittels einer Datenerfassungseinheit der mobilen Einheit erfaßt und über die Kommunikationsverbindung dem Leitzentral-Rechner gemeldet wird. Dieser registriert die Lagerbestandsveränderung, die wiederum die Lagerführung beeinflußt.

## Patentansprüche

1. Verfahren zur Verwaltung eines Lagersystems, das mehrere mobile Einheiten, wie Stapler, Flurförderfahrzeuge, Lagerarbeiter usw. umfaßt, die über eine drahtlose Kommunikationseinrichtung mit einer Leitzentrale zum Empfang von Aufträgen für durchzuführende Arbeiten in Verbindung stehen und die mittels Datenerfassungseinheiten, insbesondere Strichcode-Scannern, erfaßte Lagerbestandsveränderungen einem Leitzentral-Rechner der Leitzentrale über die Kommunikationseinrichtung mitteilen, dadurch gekennzeichnet, daß eine laufende Standortbestimmung der mobilen Einheiten mittels eines Satelliten-Navigations-Systems (GPS = Global Positioning System) erfolgt und die Standortdaten dem Leitzentral-Rechner laufend zugeführt werden, der unter Berücksichtigung der Standortdaten für jeden Auftrag eine der mobilen Einheiten nach weg- zeit- und/oder prozeßabhängigen Parametern optimiert auswählt.

2. Verfahren nach Anspruch 1, dadurch **gekennzeichnet**, daß die von den mobilen Einheiten ermittelten Standortdaten über die Kommunikationseinrichtung dem Leitzentral-Rechner zugeführt werden.

3. Verfahren nach Anspruch 1 oder 2, dadurch **gekennzeichnet**, daß die Standortdaten mittels Funk- oder Infrarotsignalen übermittelt werden.

4. Mobile Einheit zur Verwendung bei der Verwaltung eines Lagersystems, insbesondere nach einem der vorangehenden Ansprüche, mit einer Datenerfassungseinheit, insbesondere einem Strichcode-Scanner, zum Erfassen von Lagerbestandsveränderungen und einer drahtlose Kommunikationseinrichtung, gekennzeichnet durch ein Satelliten-Navigationssystem (GPS) zur laufenden Standortbestimmung der mobilen Einheit und laufenden Übermittlung der Standortdaten an einen Leitzentral-Rechner;
wobei die mobile Einheit unter Berücksichtigung der Standortdaten nach weg-, zeit- und/oder prozeßabhängigen Parametern optimiert für einen Auftrag auswählbar ist.

## Claims

1. A method of managing a warehouse system comprising a plurality of mobile units, such as stackers, industrial trucks, warehouse workers and so on, which communicate, via a wireless communication system, with a central control station for receiving orders for work required to be carried out, and which transmit warehouse stock changes detected by means of data collection units, more particularly bar code scanners, via the communication system to a central control computer at the central control station, characterised in that the location of the mobile units is continuously determined by a satellite navigation system (GPS = Global Positioning System) and the location data are continuously fed to the central control computer which, taking into account the location data, selects the optimum one of the mobile units for each order in accordance with travel, time and/or process-dependent parameters.

2. A method according to claim 1, characterised in that the location data detected by the mobile units are fed to the central control computer via the communication system.

3. A method according to claim 1 or 2, characterised in that the location data are transmitted by radio or infrared signals.

4. A mobile unit for use in the management of a warehouse system, more particularly in accordance with one of the preceding claims, with a data collection unit, more particularly a bar code scanner, for detecting warehouse stock changes and a wireless communication system, characterised by a satellite navigation system (GPS) for continuous determination of the location of the mobile unit and continuous transmission of the location data to a central control computer, wherein the mobile unit is selectable in the optimum manner for an order in accordance with travel, time and/or process-dependent parameters, taking into account the location data.

## Revendications

1. Procédé de gestion d'un système de stockage comprenant plusieurs éléments mobiles, tels que des chariots élévateurs, des chariots de manutention, des aide-magasiniers, etc., qui sont en relation, par un dispositif de communication sans fil, avec une centrale de commande pour recevoir des ordres pour des tâches à effectuer, et qui, au moyen d'éléments de saisie d'informations, notamment des scanners de codes barre, communiquent des variations de stock à un calculateur de la centrale de commande par l'intermédiaire du dispositif de communication, caractérisé en ce qu'une détermination continue de la position des éléments mobiles est effectuée à l'aide d'un système de navigation par satellite (GPS = Global Positioning System) et en ce que les données de position sont fournies continûment au calculateur de la centrale de commande qui, en tenant compte des données de position pour chaque ordre, choisit de manière optimisée l'un des éléments mobiles en fonction du chemin, du temps et/ou de paramètres dépendant du processus.

2. Procédé selon la revendication 1, caractérisé en ce que les données de position transmises par les éléments mobiles sont fournies au calculateur de la centrale de commande par l'intermédiaire du dispositif de communication.

3. Procédé selon la revendication 1 ou 2, caractérisé en ce que les données de position sont transmises par l'intermédiaire de signaux radio ou infrarouge.

4. Élément mobile à utiliser dans la gestion d'un système de stockage, notamment selon l'une quelconque des revendications précédentes, comportant un module de saisie de données, notamment un scanner de code barre, pour saisir des variations de stock et un dispositif de communication sans fil, caractérisé par un système de navigation par satellite (GPS) pour déterminer de manière continue la position de l'élément mobile et transmettre de manière continue les données de position à un calculateur de centrale de commande ;
l'élément mobile étant susceptible, en tenant compte des données de position, d'être choisi de manière optimisée pour un ordre en fonction du chemin, du temps, et/ou de paramètres dépendant du processus.
